(19) Europäisches Patentamt
European Patent Office
Office européen des brevets

(11) **EP 2 646 520 B1**

(12) **FASCICULE DE BREVET EUROPEEN**

(45) Date de publication et mention de la délivrance du brevet:
**15.06.2016 Bulletin 2016/24**

(21) Numéro de dépôt: **11802478.5**

(22) Date de dépôt: **08.11.2011**

(51) Int Cl.:
***C09K 3/30*** *(2006.01)*　　　***C09K 5/04*** *(2006.01)*
***C08J 9/14*** *(2006.01)*　　　***C11D 7/50*** *(2006.01)*

(86) Numéro de dépôt international:
**PCT/FR2011/052590**

(87) Numéro de publication internationale:
**WO 2012/072910 (07.06.2012 Gazette 2012/23)**

(54) **COMPOSITIONS A BASE DE 1,1,1,4,4,4-HEXAFLUOROBUT-2-ENE ET DE 3,3,4,4,4-PENTAFLUOROBUT-1-ENE**

1,1,1,4,4,4-HEXAFLUORBUT-2-EN UND 3,3,4,4,4-PENTAFLUORBUT-1-EN ENTHALTENDE ZUSAMMENSETZUNGEN

COMPOSITIONS CONTAINING 1,1,1,4,4,4-HEXAFLUOROBUT-2-ENE AND 3,3,4,4,4-PENTAFLUOROBUT-1-ENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2010 FR 1060066**

(43) Date de publication de la demande:
**09.10.2013 Bulletin 2013/41**

(73) Titulaire: **Arkema France 92700 Colombes (FR)**

(72) Inventeurs:
• **BOUTIER, Jean-Christophe F-69600 Oullins (FR)**
• **RACHED, Wissam F-69630 Chaponost (FR)**

(74) Mandataire: **Dang, Doris et al ARKEMA FRANCE Département Propriété Industrielle 420, rue d'Estienne d'Orves 92705 Colombes Cedex (FR)**

(56) Documents cités:
**WO-A1-2010/100254　　WO-A2-2010/055146 US-A1- 2007 108 403　　US-A1- 2010 078 585 US-A1- 2010 163 776**

**Description**

DOMAINE DE L'INVENTION

La présente invention concerne des compositions contenant du 1,1,1,4,4,4-hexafluorobut-2-ène en mélange avec du 3,3,4,4,4-pentafluorobut-1-ène, et leur utilisation, notamment en tant que fluides de transfert de chaleur.

ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est toutefois nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

Le document WO 2007/053697 décrit des compositions à base de fluorooléfines dans diverses utilisations, et notamment en tant que fluides de transfert de chaleur. Le document mentionne le 1,1,1,4,4,4-hexafluorobut-2-ène.

Le document WO 2008/134061 décrit des compositions azéotropiques ou quasi-azéotropiques comprenant du (Z)-1,1,1,4,4,4-hexafluorobut-2-ène en combinaison avec du méthylformate, du pentane, du 2-méthylbutane, du 1,1,1,3,3-pentafluorobutane, du trans-1,2-dichloroéthylène ou du 1,1,1,3,3-pentafluoropropane.

Le document WO 2008/154612 décrit des compositions azéotropiques ou quasi-azéotropiques comprenant du (E)-1,1,1,4,4,4-hexafluorobut-2-ène en combinaison avec du méthylformate, du n-pentane, du 2-méthylbutane, du trans-1,2-dichloroéthylène, du 1,1,1,3,3-pentafluoropropane, du n-butane ou de l'isobutane.

Le document WO 2010/055146 décrit des fluorooléfines et leur procédé de fabrication. Le document mentionne en particulier le (E)-1,1,1,4,4,4-hexafluorobut-2-ène.

Le document WO 2010/100254 décrit des tétrafluorobutènes, éventuellement en mélange avec des hexafluorobutènes, et leur utilisation dans diverses applications dont le transfert de chaleur.

Toutefois, il existe encore un besoin de mettre au point d'autres fluides de transfert de chaleur présentant un GWP relativement faible, et susceptibles de remplacer les fluides de transfert de chaleur usuels.

En particulier, il est souhaitable de mettre au point d'autres fluides de transfert de chaleur à bas GWP qui soient quasi-azéotropiques et / ou qui présentent de bonnes performances énergétiques par rapport à des fluides de transfert de chaleur usuels (tel que l'isobutane) et / ou des performances énergétiques améliorées par rapport aux fluides de transfert de chaleur à bas GWP connus (tel que le 1,3,3,3-tétrafluoropropène).

RESUME DE L'INVENTION

L'invention concerne en premier lieu une composition comprenant du 1,1,1,4,4,4-hexafluorobut-2-ène et du 3,3,4,4,4-pentafluorobut-1-ène.

Selon un mode de réalisation, la composition comprend ou de préférence consiste en :

-    de 0,1 à 99,9 % de 1,1,1,4,4,4-hexafluorobut-2-ène et de 0,1 à 99,9 % 3,3,4,4,4-pentafluorobut-1-ène ; ou
-    de 1 à 99 % de 1,1,1,4,4,4-hexafluorobut-2-ène et de 1 à 99 % 3,3,4,4,4-pentafluorobut-1-ène.

Selon un mode de réalisation, le 1,1,1,4,4,4-hexafluorobut-2-ène est sous forme de l'isomère trans, ou de l'isomère cis, ou d'un mélange de l'isomère trans et de l'isomère cis, et de préférence est sous forme de l'isomère trans.

L'invention a également pour objet l'utilisation de la composition ci-dessus, en tant que fluide de transfert de chaleur.

L'invention a également pour objet une composition de transfert de chaleur, comprenant la composition ci-dessus ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

L'invention a également pour objet une installation de transfert de chaleur comprenant un circuit de compression de vapeur contenant la composition ci-dessus en tant que fluide de transfert de chaleur ou contenant une composition de transfert de chaleur telle que décrite ci-dessus.

Selon un mode de réalisation, l'installation est choisie parmi les installations mobiles ou stationnaires de chauffage par pompe à chaleur, de climatisation, de réfrigération, de congélation et les cycles de Rankine.

L'invention a également pour objet un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est la composition ci-dessus.

Selon un mode de réalisation, ce procédé est un procédé de refroidissement d'un fluide ou d'un corps, dans lequel la température du fluide ou du corps refroidi est de -15 °C à 15 °C, et de préférence de -10 °C à 10 °C, de manière plus particulièrement préférée de -5°C à 5°C ; ou est un procédé de chauffage d'un fluide ou d'un corps, dans lequel la température du fluide ou du corps chauffé est de 30 °C à 90 °C, et de préférence de 35 °C à 60 °C, de manière plus particulièrement préférée de 40°C à 50°C.

L'invention a également pour objet un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est la composition ci-dessus.

L'invention a également pour objet l'utilisation de la composition ci-dessus, en tant que solvant.

L'invention a également pour objet l'utilisation de la composition ci-dessus, en tant qu'agent d'expansion.

L'invention a également pour objet l'utilisation de la composition ci-dessus, en tant qu'agent de propulsion, de préférence pour un aérosol.

L'invention a également pour objet l'utilisation de la composition ci-dessus, en tant qu'agent de nettoyage.

La présente invention permet de répondre aux besoins ressentis dans l'état de la technique. Elle fournit plus particulièrement de nouvelles compositions à bas GWP susceptibles d'être utilisées (entre autres) en tant que fluides de transfert de chaleur, notamment en remplacement des fluides de transfert de chaleur usuels.

En particulier, lorsque le 1,1,1,4,4,4-hexafluorobut-2-ène est sous forme trans, les compositions selon l'invention sont azéotropiques ou quasi-azéotropiques.

Dans certains modes de réalisation, l'invention fournit des fluides de transfert de chaleur qui présentent de bonnes performances énergétiques par rapport à des fluides de transfert de chaleur usuels et / ou présentent des performances énergétiques améliorées par rapport aux fluides de transfert de chaleur à bas GWP connus (notamment par rapport au 1,1,1,3,3-pentafluoropropane).

Dans certains modes de réalisation, les compositions selon l'invention présentent notamment une capacité volumétrique améliorée et / ou un coefficient de performance amélioré par rapport aux compositions de l'état de la technique.

## BREVE DESCRIPTION DES FIGURES

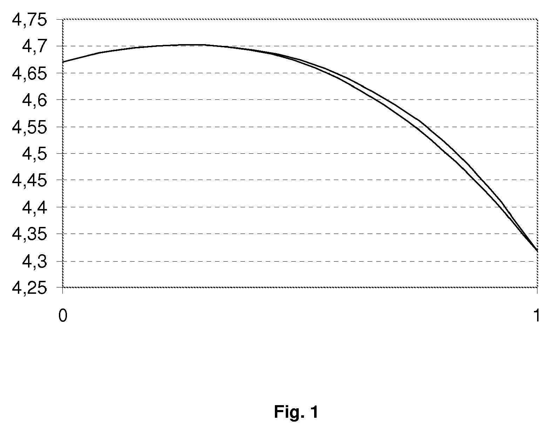

La **figure 1** représente les données d'équilibre vapeur / liquide à 50°C de mélanges binaires de HFO-1345fz et de HFO-E-1336mzz, mettant en évidence l'existence d'un azéotrope et de quasi-azéotropes. La proportion de HFO-E-1336mz entre 0 et 1 (=100%) est représentée en abscisse, et la pression en bar est représentée en ordonnée.

## DESCRIPTION DE MODES DE REALISATION DE L'INVENTION

L'invention est maintenant décrite plus en détail et de façon non limitative dans la description qui suit.

Les composés utilisés dans le cadre de l'invention sont notés comme suit :

- 1,1,1,4,4,4-hexafluorobut-2-ène : HFO-1336mzz;
- (E)-1,1,1,4,4,4-hexafluorobut-2-ène (ou 1,1,1,4,4,4-hexafluorobut-2-ène sous forme trans) : HFO-E-1336mzz ;
- (Z)-1,1,1,4,4,4-hexafluorobut-2-ène (ou 1,1,1,4,4,4-hexafluorobut-2-ène sous forme cis) : HFO-Z-1336mzz ;
- 3,3,4,4,4-pentafluorobut-1-ène : HFO-1345fz ;
- 1,1,1,3,3-pentafluoropropane : HFC-245fa.

Sauf mention contraire, dans l'ensemble de la demande les proportions de composés indiquées sont données en pourcentages massiques.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « *composé de transfert de chaleur* », respectivement « *fluide de transfert de chaleur* » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « *composition de transfert de chaleur* » on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur* ».

Les fluides de transfert de chaleur selon l'invention sont notamment appropriés pour les pompes à chaleur permettant de chauffer un fluide ou un corps à une température allant jusqu'à 125°C.

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions qui comprennent du HFO-1336mzz en combinaison avec du HFO-1345fz.

Le HFO-1336mzz peut être le HFO-E-1336mzz ou le HFO-Z-1336mzz ou un mélange de ces deux isomères. De préférence, il s'agit du HFO-E-1336mzz.

Les fluides de transfert de chaleur selon l'invention peuvent comprendre un ou plusieurs composés de transfert de chaleur supplémentaires, outre le HFO-1336mzz et le HFO-1345fz. Ces composés de transfert de chaleur supplémentaires peuvent être notamment choisis parmi les hydrocarbures, les hydrofluorocarbures, les éthers, les hydrofluoroéthers et les fluorooléfines.

Selon des modes de réalisation particuliers, les fluides de transfert de chaleur selon l'invention peuvent être des compositions ternaires (consistant en trois composés de transfert de chaleur) ou quaternaires (consistant en quatre composés de transfert de chaleur).

Toutefois les fluides de transfert de chaleur binaires, c'est-à-dire consistant en un mélange de HFO-1336mzz et de HFO-1345fz, sont préférés.

Selon des modes de réalisation particuliers, la proportion de HFO-1336mzz dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Selon des modes de réalisation particuliers, la proportion de HFO-1345fz dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Les gammes ci-dessus s'appliquent en particulier aux mélanges binaires de HFO-1336mzz et de HFO-1345fz, et notamment aux mélanges binaires de HFO-E-1336mzz et de HFO-1345fz.

Les mélanges contenant une proportion élevée de HFO-1336mzz et une proportion faible de HFO-1345fz présentent l'avantage de ne pas être inflammables.

Parmi les compositions ci-dessus, les mélanges binaires de HFO-E-1336mzz et de HFO-1345fz présentent l'avantage d'être azéotropiques ou quasi-azéotropiques (en particulier à une température de 50°C). L'azéotrope pour ce mélange binaire est obtenu pour environ 25 % de HFO-E-1336mzz, à une température de 50°C et à une pression de 4,7 bar.

On désigne par « *quasi-azéotropiques* » les compositions pour lesquelles, à température constante, la pression de saturation liquide et la pression de saturation vapeur sont quasiment identiques (la différence maximale de pression étant de 10 %, voire avantageusement de 5 %, par rapport à la pression de saturation liquide). Ces fluides de transfert de chaleur présentent un avantage de facilité de mise en oeuvre. En l'absence de glissement de température significatif, il n'y a pas de changement significatif de la composition circulante, et pas non plus de changement significatif de la composition en cas de fuite.

En outre, on a trouvé que certaines compositions selon l'invention présentent des performances améliorées par rapport au HFC-245fa, en particulier pour les procédés de refroidissement ou de chauffage à température modérée, c'est-à-dire ceux dans lesquels la température du fluide ou du corps refroidi est de -15 °C à 15 °C, de préférence de -10 °C à 10 °C, de manière plus particulièrement préférée de -5°C à 5°C (idéalement d'environ 0°C). Il s'agit en particulier des mélanges binaires de HFO-E-1336mzz et de HFO-1345fz.

Dans les procédés de « *refroidissement ou de chauffage à température modérée* » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 90°C, notamment de 30°C à 70°C, de manière plus particulièrement préférée de 35°C à 55 °C et par exemple d'environ 50 °C. Ces procédés peuvent être des procédés de réfrigération, de climatisation ou de chauffage.

Les compositions selon l'invention peuvent également être utiles en tant qu'agent d'expansion, agent de propulsion (par exemple pour un aérosol), agent de nettoyage ou solvant, outre leur utilisation en tant que fluides de transfert de chaleur.

En tant qu'agent de propulsion, les compositions selon l'invention peuvent être utilisées seules ou en combinaison avec des agents de propulsion connus. L'agent de propulsion comprend, de préférence consiste en, une composition selon l'invention. La substance active devant être projetée peut être mélangée avec l'agent de propulsion et des composés inertes, des solvants ou autres additifs, pour former une composition à projeter. De préférence, la composition à projeter est un aérosol. Les substances actives devant être projetées peuvent par exemple être des agents cosmétiques tels que les déodorants, parfums, laques, nettoyants, agents de gommage, ainsi que les agents thérapeutiques tels que les médicaments contre l'asthme et contre l'halitose.

En tant qu'agent d'expansion, les compositions selon l'invention peuvent être comprises dans une composition d'expansion, qui comprend de préférence un ou plusieurs autres composés susceptibles de réagir et de former une mousse ou structure cellulaire dans des conditions appropriées, comme cela est connu de l'homme du métier.

En particulier, l'invention propose un procédé de préparation d'un produit thermoplastique expansé comprenant d'abord la préparation d'une composition polymérique d'expansion. Typiquement, la composition polymérique d'expansion est préparée en plastifiant une résine polymère et en mélangeant les composés d'une composition d'agent d'expansion à une pression initiale. La plastification de la résine polymère peut être effectuée sous l'effet de la chaleur, en chauffant la résine polymère pour la ramollir suffisamment pour mélanger une composition d'agent d'expansion. Généralement, la température de plastification est proche de la température de transition vitreuse ou de la température de fusion pour les polymères cristallins.

D'autres utilisations des compositions selon l'invention comprennent les utilisations en tant que solvants, agents de nettoyage ou autres. On peut citer par exemple le dégraissage par la vapeur, le nettoyage de précision, le nettoyage de circuits électroniques, le nettoyage à sec, le nettoyage abrasif, les solvants pour le dépôt de lubrifiants et d'agents de libération, et d'autres traitements de solvant ou de surface.

EXEMPLES

Les exemples suivants illustrent l'invention sans la limiter.

Exemple 1 - compositions azéotropiques ou quasi-azéotropiques

Une cellule sous vide équipée d'un tube saphir est chauffée à 50°C avec un bain d'huile. Une fois l'équilibre thermique atteint, la cellule est chargée de HFO-1345fz, et la pression à laquelle l'équilibre est atteint est enregistrée. Une quantité de HFO-E-1336mzz est introduite dans la cellule, et le contenu est mélangé afin d'accélérer la mise à l'équilibre. A l'équilibre, une quantité minimale d'échantillon est prélevée de la phase gazeuse et de la phase liquide pour une analyse par chromatographie en phase gazeuse avec un détecteur thermique.

Les données d'équilibre obtenues avec différentes compositions de HFO-1345fz et de HFO-E-1336mzz sont représentées sur la **figure 1**.

Exemple 2 - résultats pour une réfrigération à température modérée, comparaison avec le HFC-245fa

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données disponibles pour chaque corps pur sont la température d'ébullition, la température critique et la pression critique, la courbe de pression en fonction de la température à partir du point d'ébullition jusqu'au point critique, les densités de liquide saturé et de vapeur saturée en fonction de la température.

Les données sur les HFC sont publiées dans l'ASHRAE Handbook 2005 chapitre 20 et sont aussi disponible sous Refrop (Logiciel développé par NIST pour le calcul des propriétés des fluides frigorigènes).

Les données de la courbe température-pression des HFO sont mesurées par la méthode statique. La température critique et la pression critique sont mesurées par un calorimètre C80 commercialisé par Setaram.

L'équation RK-Soave utilise des coefficients d'interaction binaire pour représenter le comportement des produits en mélanges. Les coefficients sont calculés en fonction des données expérimentales d'équilibre liquide vapeur.

Pour l'évaluation des performances énergétiques, on considère un système à compression équipé d'un évaporateur et condenseur à contre-courant, d'un compresseur à vis et d'un détendeur.

Le système fonctionne avec 5°C de surchauffe. La température d'évaporation est de -5°C et la température de condensation est de 50°C.

Le coefficient de performance (COP) est défini comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit (les températures T sont en K) :

$$T_{moyenne}^{condenseur} = T_{entrée}^{condenseur} - T_{sortie}^{condenseur}$$

$$T_{moyenne}^{évaporateur} = T_{sortie}^{évaporateur} - T_{entrée}^{évaporateur}$$

Le COP de Lorenz dans le cas de l'air conditionné et de la réfrigération est :

$$COPlorenz = \frac{T_{moyenne}^{évaporateur}}{T_{moyenne}^{condenseur} - T_{moyenne}^{évaporateur}}$$

Le COP de Lorenz dans le cas du chauffage est :

$$COPlorenz = \frac{T_{moyenne}^{condenseur}}{T_{moyenne}^{condenseur} - T_{moyenne}^{évaporateur}}$$

Pour chaque composition, le coefficient de performance du cycle de Lorenz est calculé en fonction des températures correspondantes.

Dans les tableaux qui suivent, *« T »* désigne la température, *« P »* désigne la pression, « % *CAP* » désigne la capacité volumétrique du fluide par rapport au fluide de référence indiqué en première ligne et *« %COP/COPLorenz»* désigne le rapport du COP du système par rapport au COP du cycle de Lorenz correspondant.

Les résultats obtenus sont les suivants :

| Composition (%) | | T sortie évaporateur (°C) | T sortie compresseur (°C) | T sortie condenseur (°C) | T entrée détendeur (°C) | P évaporateur (bar) | P condenseur (bar) | Taux de compression (p/p) | Efficacité isentropique | % CAP | %COP / COPLorenz |
|---|---|---|---|---|---|---|---|---|---|---|---|
| HFC-245fz | | -5 | 77 | 50 | 47 | 0,4 | 3,4 | 8,3 | 57,6 | 100 | 45 |
| HFO-1345fz | HFO-E-1336mzz | | | | | | | | | | |
| 100 | 0 | -5 | 56 | 50 | 47 | 0,7 | 4,7 | 6,8 | 68,3 | 131 | 48 |
| 90 | 10 | -5 | 56 | 50 | 47 | 0,7 | 4,7 | 6,8 | 68,1 | 131 | 47 |
| 80 | 20 | -5 | 56 | 50 | 47 | 0,7 | 4,7 | 6,9 | 67,8 | 130 | 47 |
| 70 | 30 | -5 | 56 | 50 | 47 | 0,7 | 4,7 | 6,9 | 67,4 | 130 | 47 |
| 60 | 40 | -5 | 56 | 50 | 47 | 0,7 | 4,7 | 7,0 | 67,0 | 129 | 47 |
| 50 | 50 | -5 | 56 | 50 | 47 | 0,7 | 4,7 | 7,1 | 66,5 | 128 | 46 |
| 40 | 60 | -5 | 56 | 50 | 47 | 0,6 | 4,6 | 7,2 | 66,0 | 126 | 46 |
| 30 | 70 | -5 | 56 | 50 | 47 | 0,6 | 4,6 | 7,3 | 65,4 | 124 | 46 |
| 20 | 80 | -5 | 56 | 50 | 47 | 0,6 | 4,5 | 7,3 | 64,7 | 122 | 45 |
| 10 | 90 | -5 | 56 | 50 | 47 | 0,6 | 4,4 | 7,4 | 64,1 | 119 | 45 |
| 0 | 100 | -5 | 56 | 50 | 47 | 0,6 | 4,3 | 7,5 | 63,7 | 116 | 45 |

## Revendications

1. Composition comprenant du 1,1,1,4,4,4-hexafluorobut-2-ène et du 3,3,4,4,4-pentafluorobut-1-ène.

2. Composition selon la revendication 1, comprenant ou de préférence consistant en; % massique:

   - de 0,1 à 99,9 % de 1,1,1,4,4,4-hexafluorobut-2-ène et de 0,1 à 99,9 % 3,3,4,4,4-pentafluorobut-1-ène ; ou
   - de 1 à 99 % de 1,1,1,4,4,4-hexafluorobut-2-ène et de 1 à 99 % 3,3,4,4,4-pentafluorobut-1-ène.

3. Composition selon la revendication 1 ou 2, dans laquelle le 1,1,1,4,4,4-hexafluorobut-2-ène est sous forme de l'isomère trans, ou de l'isomère cis, ou d'un mélange de l'isomère trans et de l'isomère cis, et de préférence est sous forme de l'isomère trans.

4. Utilisation de la composition selon l'une des revendications 1 à 3, en tant que fluide de transfert de chaleur.

5. Composition de transfert de chaleur, comprenant la composition selon l'une des revendications 1 à 3 ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

6. Installation de transfert de chaleur comprenant un circuit de compression de vapeur contenant une composition selon l'une des revendications 1 à 3 en tant que fluide de transfert de chaleur ou contenant une composition de transfert de chaleur selon la revendication 5.

7. Installation selon la revendication 6, choisie parmi les installations mobiles ou stationnaires de chauffage par pompe à chaleur, de climatisation, de réfrigération, de congélation et les cycles de Rankine.

8. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 3.

9. Procédé selon la revendication 8, qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou qui est un procédé de chauffage d'un fluide ou d'un corps, dans lequel la température du fluide ou du corps chauffé est de 30 °C à 90 °C, et de préférence de 35 °C à 60°C, de manière plus particulièrement préférée de 40°C à 50°C.

10. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'une des revendications 1 à 3.

11. Utilisation de la composition selon l'une des revendications 1 à 3, en tant que solvant.

12. Utilisation de la composition selon l'une des revendications 1 à 3, en tant qu'agent d'expansion.

13. Utilisation de la composition selon l'une des revendications 1 à 3, en tant qu'agent de propulsion, de préférence pour un aérosol.

14. Utilisation de la composition selon l'une des revendications 1 à 3, en tant qu'agent de nettoyage.


**Patentansprüche**

1. Zusammensetzung, umfassend 1,1,1,4,4,4-Hexafluor-but-2-en und 3,3,4,4,4-Pentafluorbut-1-en.

2. Zusammensetzung nach Anspruch 1, umfassend oder vorzugsweise bestehend aus; Gew.-%:

   - 0,1% bis 99,9% 1,1,1,4,4,4-Hexafluorbut-2-en und 0,1% bis 99,9% 3,3,4,4,4-Pentafluorbut-1-en; oder
   - 1% bis 99% 1,1,1,4,4,4-Hexafluorbut-2-en und 1% bis 99% 3,3,4,4,4-Pentafluorbut-1-en.

3. Zusammensetzung nach Anspruch 1 oder 2, wobei das 1,1,1,4,4,4-Hexafluorbut-2-en in Form des trans-Isomeres oder des cis-Isomers oder eines Gemischs des trans-Isomers und des cis-Isomers und vorzugsweise in Form des trans-Isomers vorliegt.

4. Verwendung der Zusammensetzung nach einem der Ansprüche 1 bis 3 als Wärmeübertragungsfluid.

5. Wärmeübertragungszusammensetzung, umfassend die Zusammensetzung nach einem der Ansprüche 1 bis 3 sowie ein oder mehrere aus Schmiermitteln, Stabilisatoren, Tensiden, Tracern, Fluoreszenzmitteln, Geruchsmitteln, Solubilisatoren und Mischungen davon ausgewählte Additive.

6. Wärmeübertragungsanlage, umfassend einen Dampfverdichtungskreislauf, der eine Zusammensetzung nach einem der Ansprüche 1 bis 3 als Wärmeübertragungsfluid enthält oder eine Wärmeübertragungszusammensetzung nach Anspruch 5 enthält.

7. Anlage nach Anspruch 6, ausgewählt aus mobilen oder stationären Wärmepumpenheizanlagen, Klimaanlagen, Kühlanlagen, Gefrieranlagen und Rankine-Zyklen.

8. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmeübertragungsfluid kondensiert und das Wärmeübertragungsfluid entspannt, wobei es sich bei dem Wärmeübertragungsfluid um eine Zusammensetzung nach einem der Ansprüche 1 bis 3 handelt.

9. Verfahren nach Anspruch 8, bei dem es sich um ein Verfahren zum Abkühlen eines Fluids oder eines Körpers handelt, bei dem die Temperatur des abgekühlten Fluids oder Körpers -15°C bis 15°C, vorzugsweise -10°C bis 10°C und weiter bevorzugt -5°C bis 5°C beträgt; oder bei dem es sich um ein Verfahren zum Erwärmen eines Fluids oder eines Körpers handelt, bei dem die Temperatur des erwärmten Fluids oder Körpers 30°C bis 90°C, vorzugsweise 35°C bis 60 °C und weiter bevorzugt 40°C bis 50°C beträgt.

10. Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Übertragungsfluid ersetzt, wobei das letztendliche Übertragungsfluid ein kleineres GWP als das anfängliche Wärmeübertragungsfluid aufweist, wobei es sich bei dem letztendlichen Wärmeübertragungsfluid um eine Zusammensetzung nach einem der Ansprüche 1 bis 3 handelt.

11. Verwendung der Zusammensetzung nach einem der Ansprüche 1 bis 3 als Lösungsmittel.

12. Verwendung der Zusammensetzung nach einem der Ansprüche 1 bis 3 als Blähmittel.

13. Verwendung der Zusammensetzung nach einem der Ansprüche 1 bis 3 als Treibmittel, vorzugsweise für ein Aerosol.

14. Verwendung der Zusammensetzung nach einem der Ansprüche 1 bis 3 als Reinigungsmittel.

## Claims

1. A composition comprising 1,1,1,4,4,4-hexafluorobut-2-ene and 3,3,4,4,4-pentafluorobut-1-ene.

2. The composition as claimed in claim 1, comprising, or preferably consisting of:

   - from 0.1% to 99.9% of 1,1,1,4,4,4-hexafluorobut-2-ene and from 0.1 % to 99.9% of 3,3,4,4,4-pentafluorobut-1-ene; or
   - from 1% to 99% of 1,1,1,4,4,4-hexafluorobut-2-ene and from 1 to 99% of 3,3,4,4,4-pentafluorobut-1-ene.

3. The composition as claimed in claim 1 or 2, wherein the 1,1,1,4,4,4-hexafluorobut-2-ene is in the form of the trans isomer, or of the cis isomer, or of a mixture of the trans isomer and the cis isomer, and is preferably in the form of the trans isomer.

4. The use of the composition as claimed in one of claims 1 to 3, as a heat-transfer fluid.

5. A heat-transfer composition comprising the composition as claimed in one of claims 1 to 3 and also one or more additives chosen from lubricants, stabilizers, surfactants, tracers, fluorescent agents, odorous agents and solubilizing agents, and mixtures thereof.

6. Heat-transfer equipment comprising a vapor compression circuit containing a composition as claimed in one of claims 1 to 3 as a heat-transfer fluid or containing a heat-transfer composition as claimed in claim 5.

7. The equipment as claimed in claim 6, chosen from mobile or stationary heat-pump heating, air conditioning, refrigeration and freezing equipment and Rankine cycles.

8. A process for heating or for cooling a fluid or a body by means of a vapor compression circuit containing a heat-transfer fluid, said process successively comprising evaporation of the heat-transfer fluid, compression of the heat-transfer fluid, condensation of the heat-transfer fluid and expansion of the heat-transfer fluid, wherein the heat-transfer fluid is a composition as claimed in one of claims 1 to 3.

9. The process as claimed in claim 8, which is a process for cooling a fluid or a body, wherein the temperature of the fluid or of the body cooled is from -15°C to 15°C, preferably from -10°C to 10°C and more particularly preferably from -5°C to 5°C; or which is a process for heating a fluid or a body, wherein the temperature of the fluid or of the body heated is from 30°C to 90°C, preferably from 35°C to 60°C and more particularly preferably from 40°C to 50°C.

10. A process for reducing the environmental impact of heat-transfer equipment comprising a vapor compression circuit containing an initial heat-transfer fluid, said process comprising a step of replacing the initial heat-transfer fluid in the vapor compression circuit with a final heat-transfer fluid, the final heat-transfer fluid having a GWP which is lower than the initial heat-transfer fluid, wherein the final heat-transfer fluid is a composition as claimed in one of claims 1 to 3.

11. The use of the composition as claimed in one of claims 1 to 3, as a solvent.

12. The use of the composition as claimed in one of claims 1 to 3, as a blowing agent.

13. The use of the composition as claimed in one of claims 1 to 3, as a propellant, preferably for an aerosol.

14. The use of the composition as claimed in one of claims 1 to 3, as a cleaning agent.

**Fig. 1**

**EP 2 646 520 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2007053697 A
- WO 2008134061 A
- WO 2008154612 A
- WO 2010055146 A
- WO 2010100254 A